# EUROPÄISCHE PATENTANMELDUNG

(11) **EP 1 099 668 A1**
(43) Veröffentlichungstag der Anmeldung: **16.05.2001**
(21) Anmeldenummer: 99122430.4
(22) Anmeldetag: 10.11.1999
(51) Int. Cl.: C02F 3/12

(54) **Verfahren zur Reinigung von kommunalem oder ähnlichem Abwasser**

(71) Anmelder: INGERLE, Kurt, A-6020 Innsbruck (AT)
(72) Erfinder: INGERLE, Kurt, A-6020 Innsbruck (AT)
(74) Vertreter: Hofinger, Engelbert, Dr.Dr.

(57) **Zusammenfassung**

Verfahren zur Reinigung von Abwasser, insbesondere auch zur Stickstoff- und Phosphorelimination, mit mehreren im Durchflußprinzip nach der Einbeckentechnologie zusammenarbeitenden Becken, die durch Tauchwände (3) in Zulaufspeicher und biologische Reaktoren unterteilt sind. In den biologischen Reaktoren laufen phasenverschoben die Phasen Schlammrückführen (S), Rühren (R), Vorabsetzen (V) und Abziehen (A) ab, soaaß ein dem Kläranlagenzulauf entsprechender Ablauf entsteht. Das in der A-Phase zulaufende Rohabwasser wird im Zulaufspeicher zwischengespeichert und kann somit nicht in den Ablauf durchschlagen. .n der an die A-Phase anschließenden S-Phase wird eingedickter Belebtschlamm vom biologischen Reaktor (2) in den Zulaufspeicher (1) rückgeführt und gleichzeitig im Zulaufspeicher gespeichertes Rohrabwasser in den biologischen Reaktor weitergeleitet. Der Zulaufspeicher hat die Aufgabe, ein Durchschlagen von Rohabwasser in cen Ablauf zu vermeiden und eine effektive Denitrifikation und biologische Phosphorelimination sicherzustellen.

## Beschreibung

Die Erfindung betrifft ein Verfahren zur Reinigung von kommunalem oder ähnlichem Abwasser nach der Einbeckentechnologie, wobei besonderes Augenmerk auf die biologische Stickstoff- und biologische Phosphorelimination gelegt wird.

Bei den herkömmlichen nach dem Belebungsverfahren arbeitenden Kläranlagen wird in einem biologischen Reaktor, dem Belebungsbecken, organische Substanz in Belebtschlamm umgewandelt. Im anschließenden Nachklärbecken sedimentiert der Belebtschlamm und das Klarwasser kann abgezogen werden. Zur Aufrechterhaltung des Prozesses muß der in der Nachklärung sedimentierte Belebtschlamm wieder in das Belebungsbecken zurückgepumpt werden. Daß die biochemischen Prozesse und die Sedimentation in verschiedenen Becken erfolgen und der Belebtschlamm im Kreis geführt wird, ist für das Verfahren wesentlich.

In der Einbeckentechnik laufen während eines Zyklus in einem Becken die verschiedenen biochemischen und physikalischen Vorgänge ab. In der Rührphase (R) - falls diese vorhanden ist - wird denitrifiziert und biologisch Phosphor entfernt. In der Belüftungsphase (B) wird organische Substanz abgebaut und zusätzlich nitrifiziert. In der Vorabsetzphase (V) läuft ein Doppelprozeß ab: Einerseits setzt sich der Schlamm ab und andererseits wird bei diesem Prozeß gleichzeitig denitrifiziert. Der sich absetzende Schlamm bildet einen Filterkörper, der auch kleine Belebtschlammflocken aus dem Klarwasser herausfiltert und somit einen guten Kläranlagenablauf garantiert. Schließlich dient die Abzugsphase (A) dem Abzug von Klarwasser aus dem Klärbecken. Auch während dieser Phase sinkt der Schlamm weiter zü Boden und ist in der Lage zu denitrifizieren. Ist das für die Denitrifikation erforderliche Nitrat aufgebraucht, kann auch eine biologische Phosphorelimination erzielt werden. Reicht die biologische Phosphorelimination nicht aus, so muß ein entsprechendes Fällungsmittel in das Klärbecken eingebracht werden. Das Fällungsmittel dient dann nicht nur der Phosphorelimination, sondern hat auch sehr positive Auswirkungen auf die Absetzeigenschaften des Schlammes.

In EP 0 851 844 A1 wird im Anspruch 1 vorgeschlagen, den biologischen Reaktor durch eine Tauchwand in einen Zulaufspeicher und ein Hauptbecken zu unterteilen, in der eventuell vorhandenen Rührphase (R) sowie in der Belüftungsphase (B) Belebtschlamm vom Hauptbecken in den Zulaufbereich zu leiten, bis in beiden Becken im wesentlichen gleiche Verhältnisse herrschen, den Schlammspiegel im Zulaufbereich während des ersten Abschnittes der Abzugsphase oberhalb der Unterkante der Tauchwand zu halten, den Durchtritt von Rohabwasser in das Hauptbecken auf diese Weise zu verzögern und ein Durchschlagen von Rohabwasser durch das Hauptbecken zu vermeiden.

Erfindungsgemäß wird jetzt vorgeschlagen, die in EP 0 851 844 A1 dargestellte Einrichtung wie folgt zu verändern: Der Belebtschlamm wird nicht in der Belüftungs- und eventuell vorhandenen Rührphase vom biologischen Reaktor in den Zulaufspeicherzurückgeführt, bis in beiden Becken im wesentlichen gleiche Verhältnisse herrschen,sondern die Schlammrückführung erfolgt nach Ende der A-Phase und noch vor Beginn der R-und B-Phase. Vorwiegend wird eingedickter Schlamm in den Zulaufspeicher rückgeführt. Es werden auch keine gleichen Verhältnisse in beiden Becken hergestellt. Vielmehr wird im biologischen Reaktor primär ein aerobes Milieu für die Nitrifikation und Elimination der organischen Substanzen und im Zulaufspeicher ein anoxes Milieu für die Denitrifikation und ein anaerobes Milieu für die biologische Phosphorelimination angestrebt.

Im **US-Patent 5,902,484** vom 11.05.1999 wird vorgeschlagen, die Abwasser- reinigung in zwei hydraulisch verbundenen Behandlungsbecken (ein großes Einlaufbecken und ein kleineres Ablaufbecken, das nach der Einbeckentechnologie arbeitet) vorzunehmen. Wesentlich ist dabei, daß die Schlammrückführung vom Ablaufbecken in das Einlaufbecken während der Mischperiode (B-und R-Phase) erfolgt. Es wird kein eingedickter Schlamm rückgeführt. In das Ablaufbecken gelangt schon biolocisch gereinigtes Abwasser. Die wesentliche Unterscheidung des US- Patentes zur vorliegenden Erfindung liegt auch hier in der völlig anderen Schlammrückführung, die eingedickten Schlamm erfaßt und eine Einleitung des biologisch nicht behandelten Abwassers in das Ablaufbecken erlaubt. Das große Einlaufbecker ces US-Patentes dient der biologischen Behandlung des Abwassers und keineswegs wie bei der vorliegenden Erfindung primär auch der Speicherung des Rohabwassers. Ein wesentlicher Unterschied ist auch in der hydraulischen Verbindung beider Becken zu sehen: Beim US-Patent ist die immer durchströmbare Öffnung in Wasserspiegelnähe und beim vorliegenden Patent in Bodennähe angeordnet. Beim US-Patent ist das erste große Becken als biologischer Reaktor für die aeroben Prozesse und bei der vorliegenden Erfindung ist das zweite Becken als biologischer Reaktor für aerobe Prozesse anzusehen.

in **AU-B-75574/81** wird ein Verfahren zur biologischen Reinigung von Abwasser vorgeschlagen. Ein Becken wird durch eine Querwand in einen Zulaufbereich und in einen nach der Einbeckentechnologie arbeitenden Hauptbereich unterteilt. Der Abwasserzufluß erfolgt kontinuierlich, was zu einem Aufstaubetrieb der Kläranlage führt. Dieses Patent unterscheidet sich grundsätzlich von der vorliegenden Erfindung: Das australische Patent sieht einen Aufstaubetrieb in einem Becken vor und die vorliegende Erfindung arbeitet mit einem Durchflußprinzip mit mehreren Becken. Ganz wesentlich ist auch die Unterscheidung in Bezug auf die Schlammrückführung. Auf weitere Details wird wegen der schon erwähnten unterschiedlichen Grundmerkmale nicht eingegangen.

**DE 4409435 A1** betrifft ein Verfahren zur simultanen biologischen Phosphor- und Stickstoffelimination. Im Becken werden aerobe, anoxe und anaerobe Zonen gebildet und schwimmfähiges Trägermaterial eingesetzt. Die vorliegende Erfindung dagegen arbeitet ohne schwimmfähiges Trägermaterial. Dieses deutsche Patent unterscheidet sich von der vorliegenden Erfindung so stark, daß auf eine Detaillierung verzichtet wird.

**DE 3147920 A1** betrifft eine Vorrichtung zur biologischen Reinigung von Abwasser mittels einer mindestens drei Becken aufweisenden Abwasserreinigungsanlage, wobei die ersten beiden Becken als Belüftungsbecken dienen und das dritte als Nachklärbecken Verwendung findet. Das Hauptmerkmal besteht darin. daß von Zeit zu Zeit die Strömungsrichtung durch diese drei Becken verändert wird. Dieses Verfahren hat mit der vorliegenden Erfindung nur sehr wenig Gemeinsamkeiten.

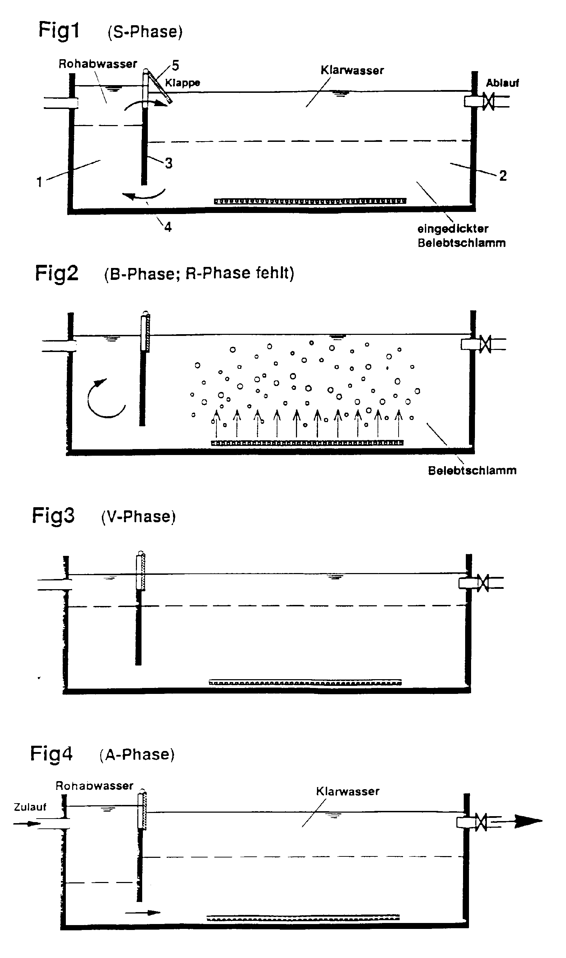

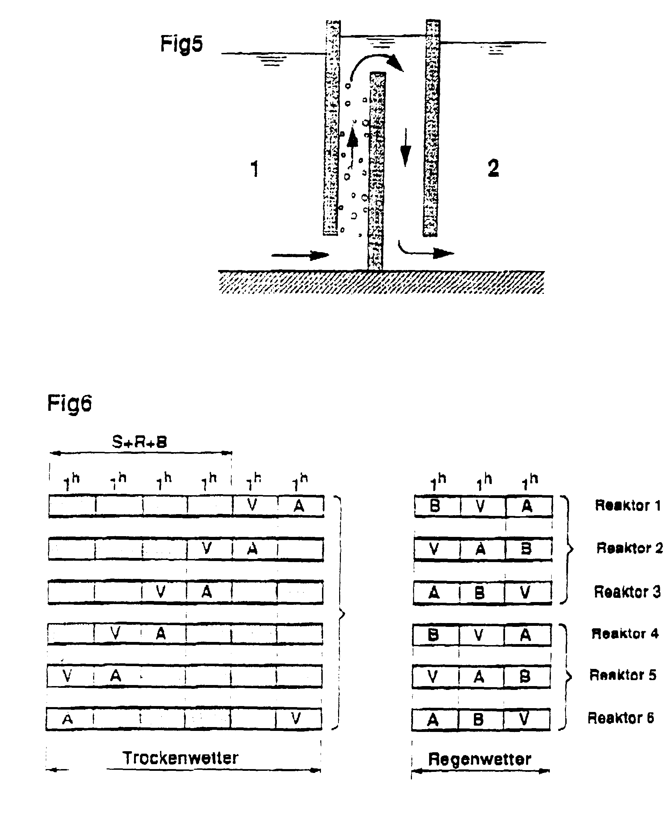

Weitere Einzelheiten der Erfindung können der Zeichnung entnommen werden. In dieser sind Fig. 1 bis Fig. 4 Vertikalschnitte in Fließrichtung, die die S-, B-, V- und A-Phase darstellen. Die in Fig. 1 bis 4 dargestellten Klappen (5) sind so auszubilden, daß sie sich in cer S-Phase für den oberflächennahen Rohabwasser-Durchfluß vom Zulaufspeicher in den biologischen Reaktor öffnen. In der A-Phase bleiben sie wegen der geringen Höhendifferenz des Wasserspiegels geschlossen, sodaß der Durchfluß durch die bodennahe Öffnung (4) erfolgen muß. Fig. 5 zeigt einen Schnitt durch einen Druckluftheber zur Schlammrückführung in der S-Phase und Fig. 6 die Phasenaufteilung einer Kläranlage mit sechs Becken (im Trockenwetterfall arbeiten die sechs Becken mit einer Zykluszeit von sechs Stunden zusammen, im Regenwetterfall wird so umgestellt, daß je drei Becken mit einer Zykluszeit von drei Stunden betrieben werden. Die Umstellung vom Trockenwetter- auf den Regenwetterfall erfordert maximal eine Stunde.

Will man einen dem Zufluß entsprechenden Ablauf der Kläranlage erreichen, müssen mindestens zwei 3ecken angeordnet und phasenverschoben betrieben werden. Bei einer vorgegebenen Wassertiefe der Becken erfordern die biochemischen Prozesse und die hydraulischen Vorgänge entsprechende Beckenflächen. Eine optimierte Kläranlage erhält man, wenn diese beiden Flächen gleich groß sind (F_{bio,erf} = F_{hydr,erf}). Die Forderung der Flächengleichheit führt schließlich zu einer optimalen Anzahl an Becken in Abhängigkeit der vorgegebenen Randbedingungen. Die biochemischen Prozesse werden primär durch folgende Parameter bestimmt: Kläranlagenbelastung (kg BSB5/d; kg TKN/d; kg P/d); Überschußschlamm (kg TS/kg BSB5); Schlammalter in Tagen; Trockensubstanz im System; Belüftungsfaktor in Abhängigkeit von der Beckenanzahl: vorgeschaltete und endogene Denitrifikationsraten. Die hydraulischen Vorgänge wiederum werden vorrangig von folgenden Faktoren bestimmt: Maximale hydraulische Belastung der Kläranlage in m3/h; Misch- bzw. Trennkanalsystem, Anzahl der Becken: Phasenlänge in h; Sinkgeschwindigkeit des Schlammspiegels; Beckentiefe.

Bei der vorliegenden Erfindung ist demnach wesentlich bzw. vorteilhaft:
- Der Kläranlagenabfluß entspricht mengenmäßig dem Kläranlagenzufluß (Durchflußprinzip).
- Für die Rückführung des Belebtschlammes vom biologischen Reaktor in den Zulaufspeicher wird eine eigene Phase, die S-Phase vorgesehen, die nach der A-Phase und noch vor der R- und B-Phase abläuft (Fig.1).
- Die Rückführung des Schlammes wird so vorgenommen, daß eingedickter Belebtschlamm vom Boden des biologischen Reaktors abgezogen und mit sehr geringer Fließgeschwindigkeit in den Bodenbereich des Zulaufspeichers eingebracht wird, daß der horizontale Schlammspiegel im Zulaufspeicher im Wesentlichen erhalten bleibt und daß eine der Schlammmenge entsprechende Rohabwassermenge in den biologischen Reaktor weitergeleitet wird. In Fig.1 erfolgt die Rohabwassereinleitung in den biologischen Reaktor durch sich öffnende Klappen in Wasserspiegelhöhe.
- Speicherung des in der A-Phase zufließenden Rohabwassers im Zulaufspeicher derart, daß der horizontale Schlammspiegel im wesentlichen erhalten bleibt, ein Durchschlagen dieses Abwassers in den Kläranlagenablauf vermieden wird und Rohabwasser in der S-Phase in den biologischen Reaktor eingeleitet werden kann. Durch das stoßweise Einleiten von Rohabwasser in den biologischen Reaktor werden die Absetzeigenschaften des Belebtschlammes verbessert und eine bessere Denitrifikation erzielt.
- Durch entsprechende Wahl des Verhältnisses von Rohabwasser zu Belebtschlamm im Zulaufspeicher, durch Erzeugen eines anoxen Milieus und eine ausreichende Kontaktzeit wird vorgeschaltet denitrifiziert.
- Durch entsprechende Wahl des Verhältnisses von Rohabwasser zu Belebtschlamm im Zulaufspeicher, durch Erzeugen eines anaeroben Milieus und eine ausreichende Kontaktzeit wird eine biologische Phosphorelimination erreicht.
- Optimale Anpassung der Kläranlage bei einer Mischwasserkanalisation an den Trockenwetter- und Regenwetterzufluß.

Der Abfluß aus einem biologischen Reaktor und somit auch der Zufluß zum Zulaufspeicher erfolgt curch Öffnen des Klarwasserablaufes.

## Patentansprüche

1. Ein Verfahren zur Reinigung von Abwasser, insbesondere auch zur Stickstoff-und Phosphorelimination, dadurch gekennzeichnet, daß folgende Schritte ablaufen:
a) Anordnen von zwei am Beckenboden (4) hydraulisch ständig verbundenen Becken.
b) Einleiten des biologisch zu behandelnden Abwassers in das erste, wesentlich kleinere Becken (1), das als Zulaufspeicher dieses Abwassers dient.
c) Weiterleiten des biologisch zu behandelnden Abwassers in das zweite, wesentlich größere Becken (2) - dem biologischen Reaktor - , in dem nach der Einbeckentechnologie zyklisch die Phasen Schlammrückführung (S), Rühren (R), Belüften (B), Vorabsetzen (V) und Abziehen des sedimentierten Klarwassers (A) ablaufen, wobei die R-Phase auch entfallen kann (siehe Fig. 1-4).
d) Halten des Wasserspiegels im biologischen Reaktor auf einem annähernd konstanten Niveau durch Anordnen von mindestens zwei, in der Regel aber von mehreren zusammenwirkenden biologischen Reaktoren, in denen die A-Phasen verschoben zeitlich aneinander grenzen, der Durchfluß durch die einzelnen biologischen Reaktoren nur in den A-Phasen stattfindet und somit ein dem Kläranlagenzufluß entsprechender Kläranlagenabfluß entsteht (Fig. 6).
e) Biologisches Behandeln des Abwassers im zweiten Becken, dem biologischen Reaktor (primär aerobes Milieu).
f) Abziehen des biologisch behandelten Abwassers aus dem biologischen Reaktor in der A-Phase nach entsprechender Sedimentation des Schlammes in der V-Phase, gleichzeitig Zulauf des Rohabwassers in den Zulaufspeicher und Speicherung im Zulaufspeicher.
g) Rückführen des in der V- und A-Phase eingedickten, hohe Trockensubstanz aufweisenden Belebtschlammes (S-Phase) nach Beendigung der A-Phase und noch vor Beginn der R- bzw. B-Phase vom biologischen Reaktor in den Zulaufspeicher und gleichzeitig Weiterleiten des im Zulaufspeicher gespeicherten Rohabwassers vom Zulaufspeicher in den biologischen Reaktor.
h) Zentrale Steuerung der einzelnen Phasen.

2. Verfahren nach Anspruch 1 dadurch gekennzeichnet, daß das in der A-Phase im Zulaufspeicher gespeicherte Rohabwasser in der anschließenden S-Phase weitgehend durch eingedickten Belebtschlamm ersetzt wird.

3. Verfahren nach Anspruch 1 bis 2, dadurch gekennzeichnet, daß das Volumen des Zulaufspeichers und die S-Phase so gestaltet wird, daß ein für die Denitrifikation und die biologische Phosphorelimination günstiges Verhältnis von Rohabwasser und eingedicktem Belebtschlamm im Zulaufspeicher entsteht und daß die Speicherwirkung zur Vermeidung des Durchschlagen von Rohabwasser in den Ablauf während der A-Phase ausreicht.

4. Verfahren nach Anspruch 1 bis 3, dadurch gekennzeichent, daß zur Rückführung des Belebtschlammes in den Zulaufspeicher Druckluftheber gemäß Fig. 5 eingesetzt werden.

5. Verfahren nach Anspruch 1 bis 4, dadurch gekennzeichnet, daß die V- und A-Phase mit je ca. einer Stunde gewählt wird.

6. Verfahren nach Anspruch 1 bis 5, dadurch gekennzeichnet, daß die S-Phase mit ca. fünf bis fünfzehn Minuten gewählt wird.

7. Verfahren nach Anspruch 1 bis 6. dadurch gekennzeichnet, daß die Länge der S-Phase proportional dem Rohabwasseranfall gewählt wird.

8. Verfahren nach Anspruch 1 bis 7, dadurch gekennzeichnet, daß in der R-Phase (falls vorhanden) sowie in der B- und V-Phase der Inhalt des Zulaufspeichers gerührt wird. um ein Absetzen des Belebtschlammes zu vermeiden, zu denitrifizieren und schließlich auch biologisch Phosphor zu eliminieren.

9. Verfahren nach Anspruch 1 bis 8, dadurch gekennzeichnet, daß in der R-Phase (falls vorhanden) sowie in der B- und V-Phase der Inhalt des Zulaufspeichers belüftet wird, um ein Absetzen des Belebtschlammes zu vermeiden und eine aerobe Reinigung des Abwassers durchzuführen.

10. Verfahren nach Anspruch 1 bis 9, dadurch gekennzeichnet, daß zur Weiterleitung des Rohabwassers vom Zulaufspeicher in den biologischen Reaktor in der S-Phase im Wasserspiegelbereich Öffnungen mit Klappen zwischen den beiden Becken (5) vorgesehen werden, die nur während der S-Phase einen Durchfluß vom Zulaufspeicher in den biologischen Reaktor ermöglichen und daß während der A-Phase der Zufluß in den biologischen Reaktor nur im Bodenbereich (4) beider Becken erfolgt.

11. Verfahren nach Anspruch 1 bis 10, dadurch gekennzeichnet, daß der biologische Reaktor als Umlaufbecken ausgebildet wird.

12. Verfahren nach Anspruch 1 bis 11, dadurch gekennzeichnet, daß der Ablauf des Klarwassers aus dem biologischen Reaktor durch einen ca. 20 bis 50 cm unter dem Wasserspiegel fix angeordneten Abzug erfolgt.

13. Verfahren nach Anspruch 1 bis 12, dadurch gekennzeichnet, daß am Ende der V-Phase in einer vorgegebenen Tiefe von ca. 1,0 bis 1,5 m unter dem minimalen Wasserspiegel die Schlammkonzentration gemessen und am Ende der A-Phase eingedickter Überschußschlamm kurzzeitig (wenige Minuten) abgezogen wird, wenn die Messung der Schlammkonzentration einen über der Meßstelle liegenden Schlammspiegel ergeben hat.

14. Verfahren nach Anspruch 1 bis 13, dadurch gekennzeichnet, daß im Falle einer Mischkanalisation und Regenwetter die Anzahl der zusammenwirkenden biologischen Reaktoren reduziert und somit die hydraulische Kapazität der Kläranlage unter gleichzeitiger Reduktion der biochemischen Kapazität erhöht wird (siehe beispielhaft Fig. 6).

15. Verfahren nach Anspruch 1 bis 14, dadurch gekennzeichnet, daß für die Belüftung feinblasige Druckluft eingesetzt wird.
